# EUROPEAN PATENT APPLICATION

(11) **EP 4 443 775 A1**
(43) Date of publication of application: **09.10.2024**
(21) Application number: 21966018.0
(22) Date of filing: 01.12.2021
(51) Int. Cl.: H04B 17/309

(54) **WIRELESS LOCAL AREA NETWORK SENSING MEASUREMENT TERMINATION METHOD AND APPARATUS, AND DEVICE AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2021/134903
(87) International publication number: WO 2023/097585

(57) **Abstract**

The embodiments of the present disclosure relate to the technical field of mobile communications, and provide a wireless local area network sensing measurement termination method and apparatus, and a device and a storage medium, which can be applied to a wireless local area network sensing initiation device. The method comprises: determining a first message frame, wherein the first message frame comprises wireless local area network sensing measurement establishment identification information, which is used for indicating the termination of corresponding established wireless local area network sensing measurement; and sending the first message frame. By means of the embodiments of the present disclosure, a wireless local area network sensing initiation device can terminate established wireless local area network sensing measurement in a wireless local area network sensing measurement process, and the invention has high applicability.

## Description

### TECHNICAL FIELD

The present disclosure relates to the field of mobile communication technology, in particular to a method for terminating wireless local area network sensing measurement, an apparatus thereof, a device, and a storage medium.

### BACKGROUND

The wireless local area network (WLAN) has characteristics of flexibility, mobility, and low cost. With the development of communication technology and the growth of user demand, research on WLAN applications such as a process of wireless local area network sensing is gradually deepening.

The process of wireless local area network sensing includes the establishment of the WLAN sensing session, the establishment of the WLAN sensing measurement, and the termination of the WLAN sensing measurement. There is currently no consensus on how to terminate the WLAN sensing measurement in the related art.

### SUMMARY

Embodiments of the present disclosure provide a method for terminating wireless local area network (WLAN) sensing measurement, an apparatus thereof, a device, and a storage medium, which can enable an initiator and a responder to terminate established WLAN sensing measurement during the process of the WLAN sensing measurement.

In a first aspect, embodiments of the present disclosure provide a method for terminating wireless local area network (WLAN) sensing measurement, performed by a WLAN sensing initiator, the method including: determining a first message frame, wherein the first message frame includes establishment identification information on WLAN sensing measurement, and the establishment identification information on WLAN sensing measurement is configured to indicate to terminate corresponding established WLAN sensing measurement; and sending the first message frame.

In a second aspect, embodiments of the present disclosure provide a method for terminating wireless local area network (WLAN) sensing measurement, performed by a WLAN sensing responder, the method including: determining a second message frame, wherein the second message frame includes establishment identification information on WLAN sensing measurement, and the establishment identification information on WLAN sensing measurement is configured to indicate to terminate corresponding established WLAN sensing measurement; and sending the second message frame.

In a third aspect, embodiments of the present disclosure provide an apparatus for terminating wireless local area network (WLAN) sensing measurement, including: a first determination unit configured to determine a first message frame, wherein the first message frame includes establishment identification information on WLAN sensing measurement, and the establishment identification information on WLAN sensing measurement is configured to indicate to terminate corresponding established WLAN sensing measurement; and a first sending unit configured to send the first message frame.

In a fourth aspect, embodiments of the present disclosure provide an apparatus for terminating wireless local area network (WLAN) sensing measurement, including: a second determination unit configured to determine a second message frame, wherein the second message frame includes establishment identification information on WLAN sensing measurement, and the establishment identification information on WLAN sensing measurement is configured to indicate to terminate corresponding established WLAN sensing measurement; and a second sending unit configured to send the second message frame.

In a fifth aspect, embodiments of the present disclosure provide a wireless local area network (WLAN) sensing initiator, including a memory, a processor, and a computer program stored in the memory and executable by the processor, wherein the processor is configured to execute the computer program, to cause the method for terminating wireless local area network (WLAN) sensing measurement as provided in the first aspect of the present disclosure to be implemented.

In a sixth aspect, embodiments of the present disclosure provide a wireless local area network (WLAN) sensing initiator, including a memory, a processor, and a computer program stored in the memory and executable by the processor, wherein the processor is configured to execute the computer program, to cause the method for terminating wireless local area network (WLAN) sensing measurement as provided in the second aspect of the present disclosure to be implemented.

In a seventh aspect, embodiments of the present disclosure provide a computer-readable storage medium having a computer program stored thereon, which when executed by a processor, the method for terminating wireless local area network (WLAN) sensing measurement as provided in the present disclosure is caused to be implemented.

In embodiments of the present disclosure, the WLAN sensing initiator can send the first message frame to the WLAN sensing responder to terminate the established WLAN sensing measurement, and the WLAN sensing responder can send the second message frame to the WLAN sensing initiator to terminate the established WLAN sensing measurement.

The additional aspects and advantages of embodiments of the present disclosure will be partially provided in the following description, which will become apparent from the following description or will be understood through practice of the present disclosure.

### BRIEF DESCRIPTION OF THE DRAWINGS

In order to provide a clearer explanation of technical solutions in embodiments of the present disclosure, a brief introduction to the drawings required in the description of embodiments of the present disclosure will be provided in the following. It is apparent that the drawings are only some of the embodiments of the present disclosure, and for those skilled in the art, other drawings can be obtained based on these drawings without creative efforts.
FIG. 1 is a flowchart of a method for terminating wireless local area network sensing measurement according to embodiments of the present disclosure;
FIG. 2 is a flowchart of a method for terminating wireless local area network sensing measurement according to embodiments of the present disclosure;
FIG. 3 is a schematic diagram of a structure of an apparatus for terminating wireless local area network sensing measurement according to embodiments of the present disclosure;
FIG. 4 is a schematic diagram of a structure of an apparatus for terminating wireless local area network sensing measurement according to embodiments of the present disclosure;
FIG. 5 is a schematic diagram of a structure of a wireless local area network initiator according to embodiments of the present disclosure; and
FIG. 6 is a schematic diagram of a structure of a wireless local area network responder according to embodiments of the present disclosure.

### DETAILED DESCRIPTION

The term "and/or" in embodiments of the present disclosure describes the association relationship between associated objects, indicating that there can be three kinds of relationships. A and/or B, for example, can indicate the presence of A alone, the presence of A and B simultaneously, and the presence of B alone. The character "/" generally indicates that associated objects have an "or" relationship between them.

The term "multiple" in embodiments of the present disclosure refers to two or more, other quantifiers are similar to this.

A detailed explanation of exemplary embodiments will be provided herein, with examples being illustrated in the drawings. The same reference numerals in different drawings represent the same or similar elements when the following description refers to the drawings, unless otherwise indicated. The implementations described in the following exemplary embodiments do not represent all implementations consistent with the present disclosure, instead, they are only examples of devices and methods consistent with some aspects of the present disclosure as detailed in the appended claims.

The terms used in embodiments of the present disclosure are for the purpose of description of specific embodiments only, and are not intended to limit the embodiments of the present disclosure. Singular forms such as "a", "said", and "the" used in embodiments of the present disclosure and the appended claims are also intended to include plural forms, unless other meanings are clearly indicated in the context. It should also be understood that the term "and/or" used in the present disclosure refers to and includes any or all possible combinations of one or more listed items related.

It should be understood that although terms such as first, second, and third may be used to describe various information in embodiments of the present disclosure, such information should not be limited to these terms, which are only used to distinguish information of the same type from each other. For example, without departing from the scope of the present disclosure, the first information can also be referred to as the second information, and similarly, the second information can also be referred to as the first information. The word "if' used herein can be interpreted as "when" or "while" or "in response to determination that", depending on the context.

A clear and complete description of technical solutions disclosed in the embodiments of the present disclosure will be provided in the following, in conjunction with the drawings. Obviously, the embodiments described are only a part of disclosed embodiments of the present disclosure and not all of them. Based on the embodiments of the present disclosure, all other embodiments obtained by those of ordinary skill in the art without creative efforts fall within the protection scope of the present disclosure.

In some embodiments, the process of wireless local area network (WLAN) sensing can be as follows: the initiator initiates the WLAN sensing (for example, initiating a WLAN sensing session), and multiple possibly existing responders can respond to the initiator.

In some embodiments, the WLAN sensing initiator and the WLAN sensing responder can include, but are not limited to, cellular phones, smart phones, wearable devices, computers, personal digital assistants (PDA), personal communication system (PCS) devices, personal information managers (PIM), personal navigation devices (PND), global positioning systems, multimedia devices, Internet of Things (IoT) devices, etc.

For the purpose of description, the WLAN sensing initiator is referred to as the initiator, and the WLAN sensing responder is referred to as the responder.

In some embodiments, the client serves as the initiator and initiates the WLAN sensing, and multiple associated or un-associated sensing responders (for example, three access points (AP)) can respond. The term "associated" here can refer that an association connection for communication between the initiator and the responder is established, and "un-associated" can refer that the association connection for communication between the initiator and the responder is not established.

The access point (AP) is a wireless switch used in the wireless network, and also an access device for the wireless network. The AP can include software applications and/or circuits, so that other types of nodes in the wireless network can communicate with the outside and the inside of the wireless network via the AP. In some embodiments, the AP can be a terminal device or a network device equipped with Wi-Fi (Wireless Fidelity) chips.

In some embodiments, multiple responders can communicate with each other. For example, the initiator and the responder can be both clients, and the initiator and the responder can communicate by connecting to the same AP.

Although the client serves as the initiator and the AP serves as the responder in the above description, the present disclosure is not limited to this. For example, the AP can serve as the initiator and the client can serve as the responder. In addition, there is no limit on the number of initiators and responders.

Embodiments of the present disclosure provide a method for terminating wireless local area network (WLAN) sensing measurement, an apparatus for terminating wireless local area network (WLAN) sensing measurement, a device, and a storage medium, for the initiator and the responder to terminate established WLAN sensing measurement in the process of wireless local area network sensing.

In some embodiments, the method and the apparatus are based on the same inventive concept. Due to the similar principles of solving problems by the method and by the apparatus, reference can be made between embodiments of the apparatus and the method, and the same will not be repeated.

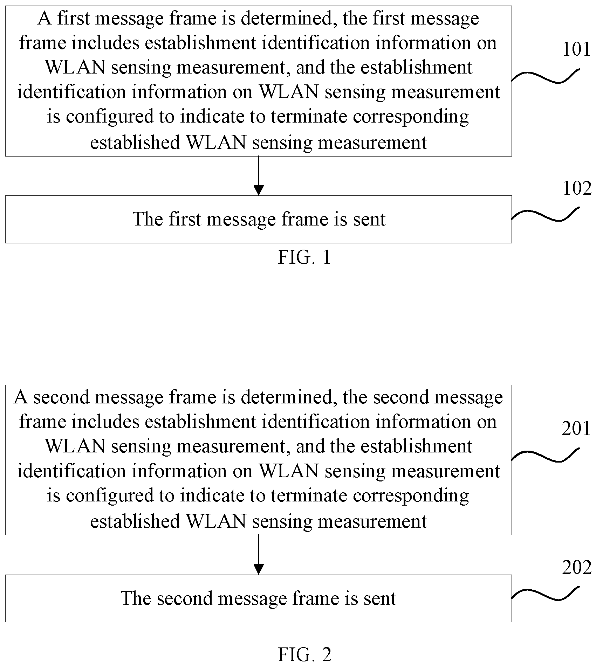

As shown in FIG. 1, embodiments of the present disclosure provide a method for terminating wireless local area network (WLAN) sensing measurement, which can be applied to the WLAN sensing initiator. The method for terminating WLAN sensing measurement shown in FIG. 1 can specifically include the following steps.

In step 101, a first message frame is determined. The first message frame includes establishment identification information on WLAN sensing measurement. The establishment identification information on WLAN sensing measurement is configured to indicate to terminate corresponding established WLAN sensing measurement.

In some embodiments, the established WLAN sensing measurement refers to the WLAN sensing measurement established by means of the establishment process of the WLAN sensing measurement, which corresponds to the initiator and the responder.

In some embodiments, the establishment identification information on WLAN sensing measurement is the identifier corresponding to the establishment of the WLAN sensing measurement. The establishment identification information on WLAN sensing measurement can include the establishment identifier(s) of one or more measurement instances, which can be used to indicate to terminate one or more established WLAN sensing measurement instances. In some embodiments, the first message frame can indicate the establishment identification information on WLAN sensing measurement through one or more bits.

In step 102, the first message frame is sent.

In some embodiments, the initiator can send the first message frame, to terminate the established WLAN sensing measurement corresponding to the establishment identification information on WLAN sensing measurement.

In some embodiments, the initiator can send the first message frame to the responder. In some embodiments, after sending the first message frame, the initiator terminates the established WLAN sensing measurement corresponding to the establishment identification information on WLAN sensing measurement in the first message frame. At the same time, the first message frame can indicate the responder to terminate the established WLAN sensing measurement corresponding to the establishment identification information on WLAN sensing measurement in the first message frame.

In some embodiments, the first message frame in the method for terminating WLAN sensing measurement further includes a device identifier of at least one device participating in the established WLAN sensing measurement.

In some embodiments, the device participating in the established WLAN sensing measurement includes at least one of the following:
a device that establishes association with the initiator; or
a device that does not establish association with the initiator.

In some embodiments, the first message frame can further include at least one of a device identifier of the device that participates in the established WLAN sensing measurement and has established association with the initiator (associated identifier, AID), or a device identifier of the device that participates in the established WLAN sensing measurement and has not yet established association with the initiator (un-associated identifier, UID).

In some embodiments, the device that does not establish association with the initiator can be the device that establishes association with the responder, which can be determined based on the requirements of an actual application scenario and is not limited here.

In some embodiments, the first message frame includes the establishment identification information on WLAN sensing measurement, and the device identifier of at least one device participating in corresponding established WLAN sensing measurement.

In some embodiments, in the case where the first message frame further includes the device identifier of at least one device participating in the established WLAN sensing measurement, in response to inclusion of the device identifier of one participating device in the first message frame, a receiving address corresponding to the first message frame is determined as a unicast address corresponding to the participating device. In some embodiments, the receiving address is determined as the Medium Access Control (MAC) address of the participating device. In response to inclusion of the device identifiers of multiple participating devices in the first message frame, the receiving address corresponding to the first message frame is determined as a multicast address or a broadcast address corresponding to the multiple participating devices. The participating device can send a response message frame separately as a reply to the first message frame, or send the response message frame using resource information carried in the first message frame, the resource information being configured for sending of the response message frame.

In some embodiments, the response message frame is configured to indicate the receipt of the first message frame and to determine to terminate the established WLAN sensing measurement corresponding to the establishment identification information on WLAN sensing measurement in the first message frame.

In some embodiments, the participating device can include the WLAN sensing responder.

According to embodiments of the present disclosure, in the case where the first message frame includes the device identifier of one participating device, the initiator sends the first message frame to the participating device corresponding to the device identifier, to enable the participating device corresponding to the device identifier to terminate the established WLAN sensing measurement corresponding to the establishment identification information on WLAN sensing measurement. In the case where the first message frame includes the identifiers of multiple participating devices, the initiator sends the first message frame to each of the participating devices through broadcasting or multicasting, to enable each participating device to terminate the established WLAN sensing measurement corresponding to the establishment identification information on WLAN sensing measurement.

In some embodiments, the first message frame in the method for terminating WLAN sensing measurement can be a WLAN sensing measurement termination message frame.

In some embodiments, the first message frame in the method for terminating WLAN sensing measurement can be determined based on a WLAN sensing measurement establishment request message frame.

In some embodiments, the first message frame is a variant of the WLAN sensing measurement establishment request message frame, and can be obtained by changing a format of the WLAN sensing measurement establishment request message frame. In some embodiments, the first message frame can be obtained by redefining the WLAN sensing measurement establishment request message frame, without changing the format of the WLAN sensing measurement establishment request message frame.

In some embodiments, the first message frame does not include parameter information required for the WLAN sensing measurement. For example, the first message frame does not include related parameters such as the bandwidth (BW), the number of long training fields (LFT), the number of spatial streams (NSS), etc., supported by the WLAN sensing measurement.

In some embodiments, the first message frame can include a first identification bit, which is configured to indicate that the first message frame is a WLAN sensing measurement termination message frame.

In some embodiments, the first message frame can be a message frame obtained based on the WLAN sensing measurement establishment request message frame, or the first message frame can also be a message frame redefined when termination of the established WLAN sensing measurement is required.

In some embodiments, the first identification bit can be a dialog token subfield. When the value of the dialog token subfield is a preset value, it indicates that the first message frame is a WLAN sensing measurement termination message frame. If the preset value is "5", that is, when the value of the dialog token subfield is set to "5", it indicates that the first message frame is the WLAN sensing measurement termination message frame.

In some embodiments, the first message frame is obtained by changing the indication content of a second identification bit in the WLAN sensing measurement establishment request message frame.

In some embodiments, the second identification bit includes at least one of the following:
an identification bit configured to indicate a bandwidth supported by the established WLAN sensing measurement;
an identification bit configured to indicate the number of long training fields (LTF) for the established WLAN sensing measurement; or
an identification bit configured to indicate the number of spatial streams (NSS) for the established WLAN sensing measurement.

The initiator can indicate to terminate the established WLAN sensing measurement by changing the indication content, such as the bandwidth supported by the established WLAN sensing measurement, the number of LTFs, the NSS, etc., of the second identification bit in the WLAN sensing measurement establishment request message frame.

In some embodiments, if the second identification bit in the WLAN sensing measurement establishment request message frame indicates that the bandwidth supported by the established WLAN sensing measurement is 20MHz, the initiator can change the bandwidth to 40MHz or other different bandwidths, to indicate to terminate the established WLAN sensing measurement.

In some embodiments, if the second identification bit in the WLAN sensing measurement establishment request message frame indicates that the number of LTFs for the established WLAN sensing measurement is 2, the initiator can change the number of LTFs to 4 or other different values, to indicate to terminate the established WLAN sensing measurement.

In some embodiments, if the second identification bit in the WLAN sensing measurement establishment request message frame indicates that the NSS for the established WLAN sensing measurement is 2, the initiator can change the NSS to 4 or other different values, to indicate to terminate the established WLAN sensing measurement.

The device (for example, the responder) that has received the first message frame can determine, based on the first identification bit (configured to indicate that the first message frame is the WLAN sensing measurement termination message frame), or based on changes in the content indicated by the second identification bit in the first message frame, that the first message frame is used to terminate the established WLAN sensing measurement, and terminate the established WLAN sensing measurement corresponding to the establishment identification information on WLAN sensing measurement in the first message frame.

In some embodiments, the first message frame can also include the device identifier of at least one device participating in the established WLAN sensing measurement.

In some embodiments, the first message frame includes the establishment identification information on WLAN sensing measurement and the device identifier of at least one device participating in the established WLAN sensing measurement, and the first message frame also includes the first identification bit configured to indicate that the first message frame is the WLAN sensing measurement termination message frame.

In some embodiments, the method for terminating WLAN sensing measurement can further include following steps:
receiving a second message frame, and the second message frame includes establishment identification information on WLAN sensing measurement; and
terminating established WLAN sensing measurement corresponding to the establishment identification information on WLAN sensing measurement.

In some embodiments, the establishment identification information on WLAN sensing measurement in the second message frame can also be used to indicate to terminate the established WLAN sensing measurement. The initiator can terminate the established WLAN sensing measurement corresponding to the establishment identification information on WLAN sensing measurement in the second message frame after receiving the second message frame.

In some embodiments, the second message frame can be sent by a device that participates in the established WLAN sensing measurement. In some embodiments, the second message frame can be sent by the WLAN sensing responder.

In some embodiments, after receiving the second message frame sent by the responder, the initiator can terminate the established WLAN sensing measurement corresponding to the establishment identification information on WLAN sensing measurement in the second message frame.

In some embodiments, the method for terminating WLAN sensing measurement can further include following steps: in the case where the first message frame is not sent and the second message frame is not received, in response to a duration during which no measurement result feedback information corresponding to the established WLAN sensing measurement is received being greater than a first duration, terminating the established WLAN sensing measurement.

In some embodiments, the first duration can be the longest response duration corresponding to the measurement result feedback information determined in the establishment process of the established WLAN sensing measurement. That is, the first duration is the longest duration that allows the initiator to wait to receive the measurement result feedback information corresponding to the established WLAN sensing measurement.

In some embodiments, the first duration can be determined based on any message frame in the establishment process of the WLAN sensing measurement. For example, the first duration can be determined based on the WLAN sensing measurement establishment request message frame in the establishment process of the WLAN sensing measurement. The specific duration can be determined based on the requirements of the actual application scenario and is not limited here.

In some embodiments, if the initiator does not send the first message frame and does not receive the second message frame sent by the responder, in response to a duration during which measurement result feedback information corresponding to the established WLAN sensing measurement sent by the responder is not received being greater than the first duration, the initiator can terminate the established WLAN sensing measurement.

In some embodiments, after the first message frame, the initiator no longer sends a null data packet (NDP) frame corresponding to the established WLAN sensing measurement follow-up, the established WLAN sensing measurement corresponding to the establishment identification information on WLAN sensing measurement in the first message frame. That is, the initiator no longer sends any information or message frames related to the established WLAN sensing measurement corresponding to the establishment identification information on WLAN sensing measurement in the first message frame.

In some embodiments, after sending the first message frame to the responder, the initiator no longer sends to the responder any NDP frames for the established WLAN sensing measurement corresponding to the establishment identification information on WLAN sensing measurement in the first message frame.

In some embodiments, after sending the first message frame, the initiator no longer receives measurement result feedback information corresponding to the established WLAN sensing measurement follow-up, the established WLAN sensing measurement corresponding to the establishment identification information on WLAN sensing measurement in the first message frame.

In some embodiments, after sending the first message frame to the responder, the initiator no longer receives any measurement result feedback information about the established WLAN sensing measurement corresponding to the establishment identification information on WLAN sensing measurement in the first message frame, sent from the responder.

In some embodiments, after receiving the second message frame and terminating the established WLAN sensing measurement corresponding to the establishment identification information on WLAN sensing measurement in the second message frame, the initiator also no longer sends the NDP frame corresponding to the established WLAN sensing measurement follow-up, the established WLAN sensing measurement corresponding to the establishment identification information on WLAN sensing measurement in the second message frame.

In some embodiments, after receiving the second message frame sent by the responder and terminating the established WLAN sensing measurement corresponding to the establishment identification information on WLAN sensing measurement in the second message frame, the initiator no longer sends to the responder any NDP frames corresponding to the established WLAN sensing measurement, the established WLAN sensing measurement corresponding to the establishment identification information on WLAN sensing measurement in the second message frame.

In some embodiments, after receiving the second message frame sent by the responder and terminating the established WLAN sensing measurement corresponding to the establishment identification information on WLAN sensing measurement in the second message frame, the initiator no longer receives the measurement result feedback information corresponding to the established WLAN sensing measurement follow-up, the established WLAN sensing measurement corresponding to the establishment identification information on WLAN sensing measurement in the second message frame.

In some embodiments, after receiving the second message frame sent by the responder and terminating the established WLAN sensing measurement corresponding to the establishment identification information on WLAN sensing measurement in the second message frame, the initiator no longer receives any measurement result feedback information for the established WLAN sensing measurement sent by the responder, the established WLAN sensing measurement corresponding to the establishment identification information on WLAN sensing measurement in the second message frame.

In some embodiments, the established WLAN sensing measurement can be an established WLAN sensing measurement under any trigger mode.

In some embodiments, the established WLAN sensing measurement can be triggered-based (TB) WLAN sensing measurement or non-triggered-based (Non-TB) WLAN sensing measurement.

In some embodiments, the establishment identification information on WLAN sensing measurement in the first message frame can be used to indicate to terminate the triggered-based (TB) WLAN sensing measurement or the non-triggered-based (Non-TB) WLAN sensing measurement.

As shown in FIG. 2, embodiments of the present disclosure provide a method for terminating wireless local area network (WLAN) sensing measurement, which can be applied to the WLAN sensing responder. The method for terminating WLAN sensing measurement shown in FIG. 2 can specifically include the following steps.

In step 201, a second message frame is determined. The second message frame includes establishment identification information on WLAN sensing measurement. The establishment identification information on WLAN sensing measurement is configured to indicate to terminate corresponding established WLAN sensing measurement.

In some embodiments, the established WLAN sensing measurement refers to the WLAN sensing measurement established by means of the establishment process of the WLAN sensing measurement, which corresponds to the initiator and the responder.

In some embodiments, the establishment identification information on WLAN sensing measurement is the identifier corresponding to the establishment of the WLAN sensing measurement. The establishment identification information on WLAN sensing measurement can include the establishment identifier(s) of one or more measurement instances, which can be used to indicate to terminate one or more established WLAN sensing measurement instances.

In some embodiments, the second message frame can indicate the establishment identification information on WLAN sensing measurement through one or more bits.

In step 202, the second message frame is sent.

In some embodiments, the responder can send the second message frame, to terminate the established WLAN sensing measurement corresponding to the establishment identification information on WLAN sensing measurement.

In some embodiments, the responder can send the second message frame to the initiator. In some embodiments, after sending the second message frame, the responder terminates the established WLAN sensing measurement corresponding to the establishment identification information on WLAN sensing measurement in the second message frame. At the same time, the second message frame can indicate the initiator to terminate the established WLAN sensing measurement corresponding to the establishment identification information on WLAN sensing measurement in the second message frame.

In some embodiments, the second message frame in the method for terminating WLAN sensing measurement further includes a device identifier of at least one device participating in the established WLAN sensing measurement.

In some embodiments, the device participating in the established WLAN sensing measurement includes at least one of the following:
a device that establishes association with the initiator; or
a device that does not establish association with the initiator.

In some embodiments, the second message frame can further include at least one of a device identifier of the device that participates in the established WLAN sensing measurement and has established association with the initiator (AID), or a device identifier of the device that participates in the established WLAN sensing measurement and has not yet established association with the initiator (UID).

In some embodiments, the device that does not establish association with the initiator can be the device that establishes association with the responder, which can be determined based on the requirements of an actual application scenario and is not limited here.

In some embodiments, the second message frame includes the establishment identification information on WLAN sensing measurement, and the device identifier of at least one device participating in corresponding established WLAN sensing measurement.

In some embodiments, in the case where the second message frame further includes the device identifier of at least one device participating in the established WLAN sensing measurement, in response to inclusion of the device identifier of one participating device in the second message frame, a receiving address corresponding to the second message frame is determined as a unicast address of the participating device. In some embodiments, the receiving address is determined as the MAC address of the participating device. In response to inclusion of the device identifiers of multiple participating devices in the second message frame, the receiving address corresponding to the second message frame is determined as a multicast address or a broadcast address corresponding to the multiple participating devices. The participating device can send a response message frame separately as a reply to the second message frame, or send the response message frame using resource information carried in the second message frame, the resource information being configured for sending of the response message frame.

In some embodiments, the response message frame is configured to indicate the receipt of the second message frame and to determine to terminate the established WLAN sensing measurement corresponding to the establishment identification information on WLAN sensing measurement in the second message frame.

According to embodiments of the present disclosure, in the case where the second message frame includes the device identifier of one participating device, the responder sends the second message frame to the participating device corresponding to the device identifier, to enable the participating device corresponding to the device identifier to terminate the established WLAN sensing measurement corresponding to the establishment identification information on WLAN sensing measurement. In the case where the second message frame includes the identifiers of multiple participating devices, the responder sends the second message frame to each of the participating devices through broadcasting or multicasting, to enable each participating device to terminate the established WLAN sensing measurement corresponding to the establishment identification information on WLAN sensing measurement.

In some embodiments, the second message frame in the method for terminating WLAN sensing measurement can be a WLAN sensing measurement termination message frame.

In some embodiments, the second message frame in the method for terminating WLAN sensing measurement can be determined based on a WLAN sensing measurement establishment request message frame.

In some embodiments, the second message frame is a variant of the WLAN sensing measurement establishment request message frame, and can be obtained by changing a format of the WLAN sensing measurement establishment request message frame. In some embodiments, the second message frame can be obtained by redefining the WLAN sensing measurement establishment request message frame, without changing the format of the WLAN sensing measurement establishment request message frame.

In some embodiments, the second message frame does not include parameter information required for the WLAN sensing measurement. For example, the second message frame does not include related parameters such as the bandwidth, the number of LFTs, the NSS, etc., supported by the WLAN sensing measurement.

In some embodiments, the second message frame can include a first identification bit, which is configured to indicate that the second message frame is a WLAN sensing measurement termination message frame.

In some embodiments, the second message frame can be a message frame obtained based on the WLAN sensing measurement establishment request message frame, or the second message frame can also be a message frame redefined when termination of the established WLAN sensing measurement is required.

In some embodiments, the first identification bit can be a dialog token subfield. When the value of the dialog token subfield is a preset value, it indicates that the second message frame is a WLAN sensing measurement termination message frame. If the preset value is "5", that is, when the value of the dialog token subfield is set to "5", it indicates that the second message frame is the WLAN sensing measurement termination message frame.

In some embodiments, the second message frame is obtained by changing the indication content of a second identification bit in the WLAN sensing measurement establishment request message frame.

In some embodiments, the second identification bit includes at least one of the following:
an identification bit configured to indicate a bandwidth supported by the established WLAN sensing measurement;
an identification bit configured to indicate the number of LTFs for the established WLAN sensing measurement; or
an identification bit configured to indicate the NSS for the established WLAN sensing measurement.

The responder can indicate to terminate the established WLAN sensing measurement by changing the indication content, such as the bandwidth supported by the established WLAN sensing measurement, the number of LTFs, the NSS, etc., of the second identification bit in the WLAN sensing measurement establishment request message frame.

In some embodiments, if the second identification bit in the WLAN sensing measurement establishment request message frame indicates that the bandwidth supported by the established WLAN sensing measurement is 20MHz, the responder can change the bandwidth to 40MHz or other different bandwidths, to indicate to terminate the established WLAN sensing measurement.

In some embodiments, if the second identification bit in the WLAN sensing measurement establishment request message frame indicates that the number of LTFs for the established WLAN sensing measurement is 2, the responder can change the number of LTFs to 4 or other different values, to indicate to terminate the established WLAN sensing measurement.

In some embodiments, if the second identification bit in the WLAN sensing measurement establishment request message frame indicates that the NSS for the established WLAN sensing measurement is 2, the responder can change the NSS to 4 or other different values, to indicate to terminate the established WLAN sensing measurement.

The device (for example, the initiator) that has received the second message frame can determine, based on the first identification bit (configured to indicate that the second message frame is the WLAN sensing measurement termination message frame), or based on changes in the content indicated by the second identification bit in the second message frame, that the second message frame is used to terminate the established WLAN sensing measurement, and terminate the established WLAN sensing measurement corresponding to the establishment identification information on WLAN sensing measurement in the second message frame.

In some embodiments, the second message frame can also include the device identifier of at least one device participating in the established WLAN sensing measurement.

In some embodiments, the second message frame includes the establishment identification information on WLAN sensing measurement and the device identifier of at least one device participating in the established WLAN sensing measurement, and the second message frame also includes the first identification bit configured to indicate that the second message frame is the WLAN sensing measurement termination message frame.

In some embodiments, the second message frame in the method for terminating WLAN sensing measurement can be encapsulated in either an Aggregate Medium Access Control Service Data Unit (A-MSDU) frame or an Aggregate Medium Access Protocol Data Unit (A-MPDU) frame.

In some embodiments, the responder can send the second message frame by sending the A-MSDU frame.

In some embodiments, the responder can send the second message frame by sending the A-MPDU frame.

In some embodiments, the second message frame encapsulated in the A-MSDU frame or the A-MPDU frame sent by the responder can include, in addition to the establishment identification information on WLAN sensing measurement, the device identifier of at least one device participating in the established WLAN sensing measurement, and/or the first identification bit configured to indicate that the second message frame is the WLAN sensing measurement termination message frame.

In some embodiments, the responder sends the second message frame by sending the A-MSDU frame, and the second message frame includes not only the identification information on the established WLAN sensing measurement, but also the device identifier of at least one device participating in the established WLAN sensing measurement.

In some embodiments, the responder sends the second message frame by sending the A-MPDU frame, and the second message frame includes not only the identification information on the established WLAN sensing measurement, but also the identification bit configured to indicate that the second message frame is the WLAN sensing measurement termination message frame.

In some embodiments, the A-MSDU frame or the A-MPDU frame sent by the responder further includes measurement result feedback information corresponding to the established WLAN sensing measurement, for example, including the measurement report corresponding to the established WLAN sensing measurement.

In some embodiments, the method for terminating WLAN sensing measurement can further include following steps:
receiving a first message frame, and the first message frame includes establishment identification information on WLAN sensing measurement; and
terminating established WLAN sensing measurement corresponding to the establishment identification information on WLAN sensing measurement.

In some embodiments, the establishment identification information on WLAN sensing measurement in the first message frame can also be used to indicate to terminate the established WLAN sensing measurement. The responder can terminate the established WLAN sensing measurement corresponding to the establishment identification information on WLAN sensing measurement in the first message frame after receiving the first message frame.

In some embodiments, the first message frame can be sent by a device that participates in the established WLAN sensing measurement. In some embodiments, the first message frame can be sent by the WLAN sensing initiator.

In some embodiments, after receiving the first message frame sent by the initiator, the responder can terminate the established WLAN sensing measurement corresponding to the establishment identification information on WLAN sensing measurement in the first message frame.

In some embodiments, the method for terminating WLAN sensing measurement can further include following steps: in the case where the second message frame is not sent and the first message frame is not received, in response to a duration during which no NDP frames corresponding to the established WLAN sensing measurement are received being greater than a second duration, terminating the established WLAN sensing measurement.

In some embodiments, the second duration can be the longest response duration corresponding to the NDP frame determined in the establishment process of the established WLAN sensing measurement. That is, the second duration is the longest duration that allows the responder to wait to receive the NDP frame corresponding to the established WLAN sensing measurement.

In some embodiments, the second duration can be determined based on any message frame in the establishment process of the WLAN sensing measurement. For example, the second duration can be determined based on the WLAN sensing measurement establishment request message frame in the establishment process of the WLAN sensing measurement. The specific duration can be determined based on the requirements of the actual application scenario and is not limited here.

In some embodiments, if the responder does not send the second message frame and does not receive the first message frame sent by the initiator, in response to a duration during which the NDP frame corresponding to the established WLAN sensing measurement sent by the initiator is not received being greater than the second duration, the responder can terminate the established WLAN sensing measurement.

In some embodiments, after sending the second message frame, the responder no longer sends measurement result feedback information corresponding to the established WLAN sensing measurement follow-up, the established WLAN sensing measurement corresponding to the establishment identification information on WLAN sensing measurement in the second message frame. That is, the responder no longer sends any measurement result feedback information related to the established WLAN sensing measurement corresponding to the establishment identification information on WLAN sensing measurement in the second message frame.

In some embodiments, after sending the second message frame to the initiator, the responder no longer sends to the initiator any measurement result feedback information about the established WLAN sensing measurement corresponding to the establishment identification information on WLAN sensing measurement in the second message frame.

In some embodiments, after sending the second message frame, the responder no longer receives NDP frames corresponding to the established WLAN sensing measurement follow-up, the established WLAN sensing measurement corresponding to the establishment identification information on WLAN sensing measurement in the second message frame.

In some embodiments, after sending the second message frame to the initiator, the responder no longer receives any NDP frames for the established WLAN sensing measurement corresponding to the establishment identification information on WLAN sensing measurement in the second message frame, sent from the initiator.

In some embodiments, after receiving the first message frame and terminating the established WLAN sensing measurement corresponding to the establishment identification information on WLAN sensing measurement in the first message frame, the responder also no longer sends the measurement result feedback information corresponding to the established WLAN sensing measurement follow-up, the established WLAN sensing measurement corresponding to the establishment identification information on WLAN sensing measurement in the first message frame.

In some embodiments, after receiving the first message frame sent by the initiator and terminating the established WLAN sensing measurement corresponding to the establishment identification information on WLAN sensing measurement in the first message frame, the responder no longer sends to the initiator any measurement result feedback information corresponding to the established WLAN sensing measurement, the established WLAN sensing measurement corresponding to the establishment identification information on WLAN sensing measurement in the first message frame.

In some embodiments, after receiving the first message frame sent by the initiator and terminating the established WLAN sensing measurement corresponding to the establishment identification information on WLAN sensing measurement in the first message frame, the responder no longer receives the NDP frames corresponding to the established WLAN sensing measurement follow-up, the established WLAN sensing measurement corresponding to the establishment identification information on WLAN sensing measurement in the first message frame.

In some embodiments, after receiving the first message frame sent by the initiator and terminating the established WLAN sensing measurement corresponding to the establishment identification information on WLAN sensing measurement in the first message frame, the responder no longer receives any NDP frames for the established WLAN sensing measurement sent by the initiator, the established WLAN sensing measurement corresponding to the establishment identification information on WLAN sensing measurement in the first message frame.

In some embodiments, the established WLAN sensing measurement can be an established WLAN sensing measurement under any trigger mode.

In some embodiments, the established WLAN sensing measurement can be triggered-based (TB) WLAN sensing measurement or non-triggered-based (Non-TB) WLAN sensing measurement.

In some embodiments, the establishment identification information on WLAN sensing measurement in the second message frame can be used to indicate to terminate the triggered-based (TB) WLAN sensing measurement or the non-triggered-based (Non-TB) WLAN sensing measurement.

According to the method for terminating WLAN sensing measurement provided in embodiments of the present disclosure, both the WLAN sensing initiator and the WLAN sensing responder can actively send the message frame containing the identification information configured to indicate to terminate the established WLAN sensing measurement, so as to terminate the established WLAN sensing measurement. The WLAN sensing initiator and the WLAN sensing responder can terminate the established WLAN sensing measurement after receiving the message frame containing the identification information configured to indicate to terminate the established WLAN sensing measurement, providing high applicability.

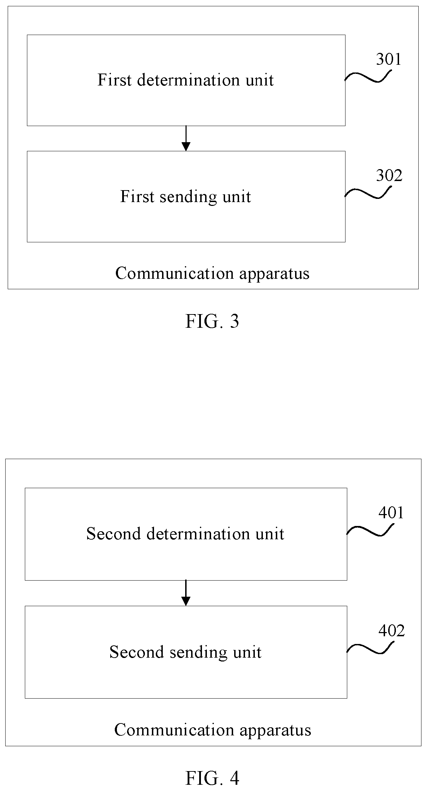

As shown in FIG. 3, embodiments of the present disclosure provide an apparatus for terminating wireless local area network (WLAN) sensing measurement, which includes a first determination unit 301 and a first sending unit 302.

The first determination unit 301 is configured to determine the first message frame. The first message frame includes establishment identification information on WLAN sensing measurement. The establishment identification information on WLAN sensing measurement is configured to indicate to terminate corresponding established WLAN sensing measurement.

The first sending unit 302 is configured to send the first message frame.

In some embodiments, the first message frame further includes a device identifier of at least one participating device in the established WLAN sensing measurement, and the participating device includes at least one of the following:
a device that establishes association with the initiator; or
a device that does not establish association with the initiator.

In some embodiments, in response to inclusion of the device identifier of one participating device in the first message frame, a receiving address corresponding to the first message frame is determined as a Medium Access Control (MAC) address of the participating device; and in response to inclusion of device identifiers of multiple participating devices in the first message frame, the receiving address corresponding to the first message frame is determined as a multicast address or a broadcast address corresponding to the multiple participating devices.

In some embodiments, the first message frame is a WLAN sensing measurement termination message frame.

In some embodiments, the first message frame is determined based on a WLAN sensing measurement establishment request message frame.

In some embodiments, the first message frame indicates through a first identification bit that the first message frame is the WLAN sensing measurement termination message frame.

In some embodiments, the first message frame is obtained by changing an indication content of a second identification bit in the WLAN sensing measurement establishment request message frame, and the second identification bit includes at least one of the following:
an identification bit configured to indicate a bandwidth supported by the established WLAN sensing measurement;
an identification bit configured to indicate a number of long training fields (LTF) for the established WLAN sensing measurement; or
an identification bit configured to indicate a number of spatial streams (NSS) for the established WLAN sensing measurement.

In some embodiments, the apparatus further includes a first processing unit.

In some embodiments, the first processing unit is configured to receive a second message frame, the second message frame including the establishment identification information on WLAN sensing measurement, and terminate the established WLAN sensing measurement corresponding to the establishment identification information on WLAN sensing measurement.

In some embodiments, the first processing unit is further configured to: in a case where the first message frame is not sent and the second message frame is not received, in response to a duration during which no measurement result feedback information corresponding to the established WLAN sensing measurement is received being greater than a first duration, terminating the established WLAN sensing measurement.

In some embodiments, the first duration is a longest response duration corresponding to the measurement result feedback information determined in an establishment process of the established WLAN sensing measurement.

As shown in FIG. 4, embodiments of the present disclosure provide an apparatus for terminating wireless local area network (WLAN) sensing measurement, which includes a second determination unit 401 and a second sending unit 402.

The second determination unit 401 is configured to determine a second message frame. The second message frame includes establishment identification information on WLAN sensing measurement. The establishment identification information on WLAN sensing measurement is configured to indicate to terminate corresponding established WLAN sensing measurement.

The second sending unit 402 is configured to send the second message frame.

In some embodiments, the second message frame further includes a device identifier of at least one participating device in the established WLAN sensing measurement, and the participating device includes at least one of the following:
a device that establishes association with a WLAN sensing initiator; or
a device that does not establish association with the WLAN sensing initiator.

In some embodiments, in response to inclusion of the device identifier of one participating device in the second message frame, a receiving address corresponding to the second message frame is determined as a Medium Access Control (MAC) address of the participating device; and in response to inclusion of device identifiers of multiple participating devices in the second message frame, the receiving address corresponding to the second message frame is determined as a multicast address or a broadcast address corresponding to the multiple participating devices.

In some embodiments, the second message frame is a WLAN sensing measurement termination message frame.

In some embodiments, the second message frame is determined based on a WLAN sensing measurement establishment request message frame.

In some embodiments, the second message frame indicates through a first identification bit that the second message frame is the WLAN sensing measurement termination message frame.

In some embodiments, the second message frame is obtained by changing an indication content of a second identification bit in the WLAN sensing measurement establishment request message frame, and the second identification bit includes at least one of the following:
an identification bit configured to indicate a bandwidth supported by the established WLAN sensing measurement;
an identification bit configured to indicate a number of long training fields (LTF) for the established WLAN sensing measurement; or
an identification bit configured to indicate a number of spatial streams (NSS) for the established WLAN sensing measurement.

In some embodiments, the second message frame is encapsulated in an Aggregate Medium Access Control Service Data Unit (A-MSDU) frame or an Aggregate Medium Access Protocol Data Unit (A-MPDU) frame, and the A-MSDU frame or the A-MPDU frame includes measurement result feedback information corresponding to the established WLAN sensing measurement.

In some embodiments, the apparatus further includes a second processing unit.

The second processing unit is configured to receive a first message frame, the first message frame including the establishment identification information on WLAN sensing measurement, and terminate the established WLAN sensing measurement corresponding to the establishment identification information on WLAN sensing measurement.

In some embodiments, the second processing unit is further configured to: in a case where the second message frame is not sent and the first message frame is not received, in response to a duration during which no null data packet (NDP) frames corresponding to the established WLAN sensing measurement are received being greater than a second duration, terminating the established WLAN sensing measurement.

In some embodiments, the second duration is a longest response duration corresponding to the NDP frames determined in an establishment process of the established WLAN sensing measurement.

According to the apparatus for terminating WLAN sensing measurement provided in embodiments of the present disclosure, both the WLAN sensing initiator and the WLAN sensing responder can actively send the message frame containing the identification information configured to indicate to terminate the established WLAN sensing measurement, so as to terminate the established WLAN sensing measurement. The WLAN sensing initiator and the WLAN sensing responder can terminate the established WLAN sensing measurement after receiving the message frame containing the identification information configured to indicate to terminate the established WLAN sensing measurement, providing high applicability.

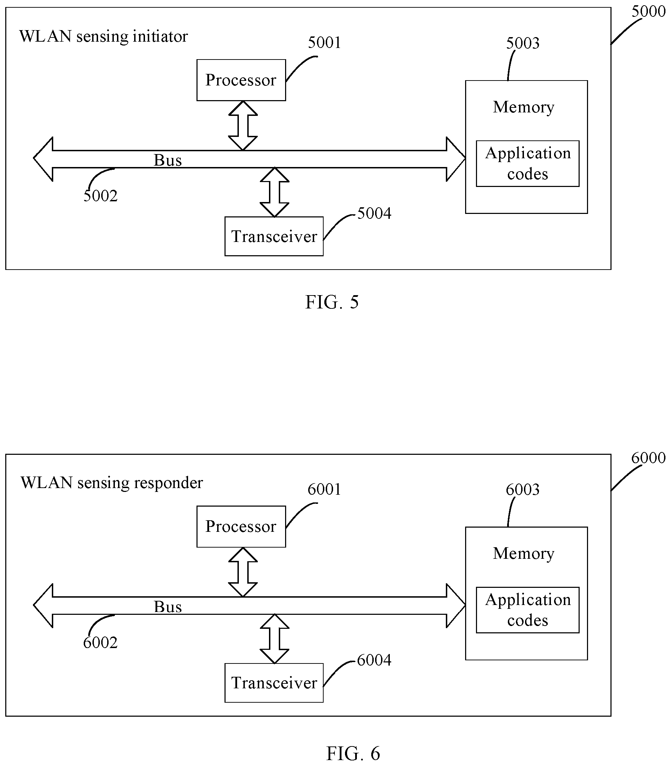

Embodiments of the present disclosure also provide a WLAN sensing initiator, as shown in FIG. 5. The WLAN sensing initiator 5000 shown in FIG. 5 can be a server, including a processor 5001 and a memory 5003. In some embodiments, the processor 5001 is connected to the memory 5003, such as through a bus 5002. In some embodiments, the WLAN sensing initiator 5000 can further include a transceiver 5004. It should be noted that in practical applications, the transceiver 5004 is not limited to one transceiver, and the structure of the WLAN sensing initiator 5000 does not constitute a limitation on embodiments of the present disclosure.

The memory 5003 is configured to store application program codes for executing the embodiments of the present disclosure, and is controlled by the processor 5001 for execution. The processor 5001 is configured to execute the application program codes stored in the memory 5003, to implement the method for terminating WLAN sensing measurement applicable to the WLAN sensing initiator in the present disclosure.

Embodiments of the present disclosure also provide a WLAN sensing initiator, as shown in FIG. 5. The WLAN sensing initiator 5000 shown in FIG. 5 can be a server, including a processor 5001 and a memory 5003. In some embodiments, the processor 5001 is connected to the memory 5003, such as through a bus 5002. In some embodiments, the WLAN sensing initiator 5000 can further include a transceiver 5004. It should be noted that in practical applications, the transceiver 5004 is not limited to one transceiver, and the structure of the WLAN sensing initiator 5000 does not constitute a limitation on embodiments of the present disclosure.

The memory 5003 is configured to store application program codes for executing the embodiments of the present disclosure, and is controlled by the processor 5001 for execution. The processor 5001 is configured to execute the application program codes stored in the memory 5003, to implement the method for terminating WLAN sensing measurement applicable to the WLAN sensing initiator in FIG. 1.

Embodiments of the present disclosure also provide a WLAN sensing responder, as shown in FIG. 6. The WLAN sensing responder 6000 shown in FIG. 6 can be a server, including a processor 6001 and a memory 6003. In some embodiments, the processor 6001 is connected to the memory 6003, such as through a bus 6002. In some embodiments, the WLAN sensing responder 6000 can further include a transceiver 6004. It should be noted that in practical applications, the transceiver 6004 is not limited to one transceiver, and the structure of the WLAN sensing responder 6000 does not constitute a limitation on embodiments of the present disclosure.

The memory 6003 is configured to store application program codes for executing the embodiments of the present disclosure, and is controlled by the processor 6001 for execution. The processor 6001 is configured to execute the application program codes stored in the memory 6003, to implement the method for terminating WLAN sensing measurement applicable to the WLAN sensing responder in FIG. 2.

The processor 5001 and the processor 6001 can be a CPU (Central Processing Unit), a general-purpose processor, a DSP (Digital Signal Processor), an ASIC (Application Specific Integrated Circuit), an FPGA (Field Programmable Gate Array), or other programmable logic devices, transistor logic devices, hardware components, or any combination thereof, which can implement or execute various exemplary logical blocks, modules, and circuits described in conjunction with the present disclosure. The processor 5001 and the processor 6001 can also be a combination of computing functions, such as a combination containing one or more microprocessors, a combination containing the DSP and the microprocessor, etc.

The bus 5002 and the bus 6002 can include a path for delivering information between the aforementioned components. The bus 5002 and the bus 6002 can be a PCI (Peripheral Component Interconnect) bus or an EISA (Extended Industry Standard Architecture) bus, etc. The bus 5002 and the bus 6002 can be divided into an address bus, a data bus, a control bus, etc. For ease of representation, only one thick line is used in FIGS. 5 and 6, but it does not mean that there is only one bus or one type of bus.

The memory 5003 and the memory 6003 can be ROM (Read Only Memory) or other types of static storage devices that can store static information and instructions, RAM (Random Access Memory) or other types of dynamic storage devices that can store information and instructions, or EEPROM (Electrically Erasable Programmable Read Only Memory), CD-ROM (Compact Disc Read Only Memory), or other optical disk storage devices, optical disc storage devices (including compressed discs, laser discs, optical discs, digital universal discs, Blu-ray discs, etc.), magnetic disk storage media or other magnetic storage devices, or any other media that can be used to carry or store desired program codes in the form of instructions or data structures and can be accessed by computers, but not limited to this.

Embodiments of the present disclosure provide a computer-readable storage medium on which a computer program is stored. When the computer program is running on a computer, enables the computer to implement the corresponding content of the aforementioned method embodiments.

It should be understood that although the various steps in the flowchart in the drawings are displayed in sequence indicated by arrows, these steps are not necessarily executed in the order indicated by the arrows. Unless explicitly stated in the article, the execution of these steps does not have strict order restrictions and can be carried out in other orders. Moreover, at least a portion of the steps in the flowchart of the drawings can include multiple sub steps or stages, which may not necessarily be completed at the same time, but may be executed at different times, and their execution order may not necessarily be in sequence, but may rotate or alternate with at least a portion of other steps or sub steps or stages.

It should be noted that the computer-readable medium mentioned in the present disclosure can be a computer-readable signal medium, a computer-readable storage medium, or any combination of the two. The computer-readable storage medium can be, but is not limited to, an electrical, magnetic, optical, electromagnetic, infrared, or semiconductor system, apparatus, or device, or any combination thereof. More specific examples of the computer-readable storage medium can include, but are not limited to: electrical connections with one or more wires, portable computer disks, hard drives, random access memory (RAM), read-only memory (ROM), erasable programmable read-only memory (EPROM or flash), fiber optics, portable compact disk read-only memory (CD-ROM), optical storage devices, magnetic storage devices, or any suitable combination of the above. In the present disclosure, a computer-readable storage medium can be any tangible medium containing or storing a program, which can be used by an instruction execution system, apparatus, or device, or in combination with it. In the present disclosure, the computer-readable signal medium can include data signals propagated in the baseband or as part of the carrier wave, which carry computer-readable program codes. This type of transmitted data signal can take various forms, including but not limited to electromagnetic signals, optical signals, or any suitable combination of the above. The computer-readable signal medium can also be any computer-readable medium other than a computer-readable storage medium, which can send, propagate, or transmit programs for use by an instruction execution system, apparatus, or device, or in combination with it. The program code contained on computer-readable medium can be transmitted using any appropriate medium, including but not limited to: wires, optical cables, RF (radio frequency), etc., or any suitable combination of the above.

The above-mentioned computer-readable storage medium can be included in the wireless local area network (WLAN) initiator or responder mentioned above, which can also exist independently without being installed in the WLAN initiator or responder.

The above-mentioned computer-readable medium carries one or more programs, which, when executed by the WLAN initiator or responder, cause the initiator or responder to implement corresponding method for terminating WLAN sensing measurement.

According to one aspect of the present disclosure, a computer program product or computer program is provided, including computer instructions stored in a computer-readable storage medium. The processor of a computer device reads the computer instruction from the computer-readable storage medium, executes the computer instructions, and causes the computer device to implement the methods for terminating WLAN sensing measurement provided in the various embodiments mentioned above.

The computer program codes for implementing the operations disclosed herein can be written in one or more programming languages or combinations thereof, including object-oriented programming languages such as Java, Smalltalk, C++, and conventional procedural programming languages such as C or similar programming languages. The program codes can be completely executed on the user's computer, partially executed on the user's computer, executed as an independent software package, partially executed on the user's computer and partially executed on a remote computer, or completely executed on the remote computer or a server. In the case where remote computers are involved, the remote computer can be connected to the user computer through any type of networks, including local area networks (LAN) or wide area networks (WAN), or can be connected to an external computer (such as connected via the internet provided by internet service providers).

The flowchart and block diagram in the drawings illustrate the possible architectures, functions, and operations of the systems, methods, and computer program products according to various embodiments of the present disclosure. Each box in a flowchart or block diagram can represent a module, a program segment, or a part of codes that contain one or more executable instructions for implementing a specified logical function. It should also be noted that in some embodiments, the functions indicated in the box can also occur in a different order than those indicated in the drawings. For example, two consecutive boxes can actually be executed in basic parallel order, and sometimes they can also be executed in opposite order, depending on the functionality involved. It should also be noted that each box in the block diagram and/or flowchart, as well as the combination of boxes in the block diagram and/or flowchart, can be implemented using dedicated hardware based systems that perform specified functions or operations, or can be implemented using a combination of dedicated hardware and computer instructions.

The modules described in embodiments of the present disclosure can be implemented through software or hardware. In some embodiments, the name of the module does not constitute a limitation on the module itself in a certain situation. For example, module A can also be described as "module A used to perform operation B".

The above description is only for embodiments of the present disclosure and an explanation of the technical principles involved. Those skilled in the art should understand that the scope of the present disclosure is not limited to technical solutions formed by specific combinations of the technical features mentioned above, and should also cover other technical solutions formed by arbitrary combinations of the technical features mentioned above or their equivalent features without departing from the concept disclosed. For example, a technical solution formed by replacing the above features with technical features with similar functions disclosed (but not limited to) in the present disclosure.

## Claims

1. A method for terminating wireless local area network (WLAN) sensing measurement, performed by a WLAN sensing initiator, the method comprising:
determining a first message frame, wherein the first message frame comprises establishment identification information on WLAN sensing measurement, and the establishment identification information on WLAN sensing measurement is configured to indicate to terminate corresponding established WLAN sensing measurement; and
sending the first message frame.

2. The method according to claim 1, wherein the first message frame further comprises a device identifier of at least one participating device in the established WLAN sensing measurement, and the participating device comprises at least one of
a device that establishes association with the initiator; or
a device that does not establish association with the initiator.

3. The method according to claim 2, wherein
in response to inclusion of the device identifier of one participating device in the first message frame, a receiving address corresponding to the first message frame is a Medium Access Control (MAC) address of the participating device; and
in response to inclusion of device identifiers of multiple participating devices in the first message frame, the receiving address corresponding to the first message frame is a multicast address or a broadcast address corresponding to the multiple participating devices.

4. The method according to claim 1, wherein the first message frame is a WLAN sensing measurement termination message frame.

5. The method according to claim 4, wherein the first message frame is determined based on a WLAN sensing measurement establishment request message frame.

6. The method according to claim 5, wherein the first message frame indicates through a first identification bit that the first message frame is the WLAN sensing measurement termination message frame.

7. The method according to claim 5, wherein the first message frame is obtained by changing an indication content of a second identification bit in the WLAN sensing measurement establishment request message frame, and the second identification bit comprises at least one of
an identification bit configured to indicate a bandwidth supported by the established WLAN sensing measurement;
an identification bit configured to indicate a number of long training fields (LTF) for the established WLAN sensing measurement; or
an identification bit configured to indicate a number of spatial streams (NSS) for the established WLAN sensing measurement.

8. The method according to claim 1, further comprising:
receiving a second message frame, wherein the second message frame comprises the establishment identification information on WLAN sensing measurement; and
terminating the established WLAN sensing measurement corresponding to the establishment identification information on WLAN sensing measurement.

9. The method according to claim 8, further comprising:
in a case where the first message frame is not sent and the second message frame is not received, in response to a duration during which no measurement result feedback information corresponding to the established WLAN sensing measurement is received being greater than a first duration, terminating the established WLAN sensing measurement.

10. The method according to claim 9, wherein the first duration is a longest response duration corresponding to the measurement result feedback information determined in an establishment process of the established WLAN sensing measurement.

11. A method for terminating wireless local area network (WLAN) sensing measurement, performed by a WLAN sensing responder, the method comprising:
determining a second message frame, wherein the second message frame comprises establishment identification information on WLAN sensing measurement, and the establishment identification information on WLAN sensing measurement is configured to indicate to terminate corresponding established WLAN sensing measurement; and
sending the second message frame.

12. The method according to claim 11, wherein the second message frame further comprises a device identifier of at least one participating device in the established WLAN sensing measurement, and the participating device comprises at least one of:
a device that establishes association with a WLAN sensing initiator; or
a device that does not establish association with the WLAN sensing initiator.

13. The method according to claim 12, wherein
in response to inclusion of the device identifier of one participating device in the second message frame, a receiving address corresponding to the second message frame is a Medium Access Control (MAC) address of the participating device; and
in response to inclusion of device identifiers of multiple participating devices in the second message frame, the receiving address corresponding to the second message frame is a multicast address or a broadcast address corresponding to the multiple participating devices.

14. The method according to claim 11, wherein the second message frame is a WLAN sensing measurement termination message frame.

15. The method according to claim 14, wherein the second message frame is determined based on a WLAN sensing measurement establishment request message frame.

16. The method according to claim 15, wherein the second message frame indicates through a first identification bit that the second message frame is the WLAN sensing measurement termination message frame.

17. The method according to claim 15, wherein the second message frame is obtained by changing an indication content of a second identification bit in the WLAN sensing measurement establishment request message frame, and the second identification bit comprises at least one of
an identification bit configured to indicate a bandwidth supported by the established WLAN sensing measurement;
an identification bit configured to indicate a number of long training fields (LTF) for the established WLAN sensing measurement; or
an identification bit configured to indicate a number of spatial streams (NSS) for the established WLAN sensing measurement.

18. The method according to claim 11, wherein the second message frame is encapsulated in an Aggregate Medium Access Control Service Data Unit (A-MSDU) frame or an Aggregate Medium Access Protocol Data Unit (A-MPDU) frame, and wherein the A-MSDU frame or the A-MPDU frame comprises measurement result feedback information corresponding to the established WLAN sensing measurement.

19. The method according to claim 11, further comprising:
receiving a first message frame, wherein the first message frame comprises the establishment identification information on WLAN sensing measurement; and
terminating the established WLAN sensing measurement corresponding to the establishment identification information on WLAN sensing measurement.

20. The method according to claim 19, further comprising:
in a case where the second message frame is not sent and the first message frame is not received, in response to a duration during which no null data packet (NDP) frames corresponding to the established WLAN sensing measurement are received being greater than a second duration, terminating the established WLAN sensing measurement.

21. The method according to claim 20, wherein the second duration is a longest response duration corresponding to the NDP frames determined in an establishment process of the established WLAN sensing measurement.

22. An apparatus for terminating wireless local area network (WLAN) sensing measurement, comprising:
a first determination unit configured to determine a first message frame, wherein the first message frame comprises establishment identification information on WLAN sensing measurement, and the establishment identification information on WLAN sensing measurement is configured to indicate to terminate corresponding established WLAN sensing measurement; and
a first sending unit configured to send the first message frame.

23. An apparatus for terminating wireless local area network (WLAN) sensing measurement, comprising:
a second determination unit configured to determine a second message frame, wherein the second message frame comprises establishment identification information on WLAN sensing measurement, and the establishment identification information on WLAN sensing measurement is configured to indicate to terminate corresponding established WLAN sensing measurement; and
a second sending unit configured to send the second message frame.

24. A wireless local area network (WLAN) sensing initiator, comprising a memory, a processor, and a computer program stored in the memory and executable by the processor, wherein the processor is configured to execute the computer program, to cause the method according to any of claims 1 to 10 to be implemented.

25. A wireless local area network (WLAN) sensing responder, comprising a memory, a processor, and a computer program stored in the memory and executable by the processor, wherein the processor is configured to execute the computer program, to cause the method according to any of claims 11 to 21 to be implemented.

26. A computer-readable storage medium having a computer program stored thereon, which when executed by a processor, the method according to any of claims 1 to 21 is caused to be implemented.
